# EUROPÄISCHE PATENTSCHRIFT

(11) **EP 1 189 443 B1**
(45) Veröffentlichungstag und Bekanntmachung des Hinweises auf die Patenterteilung: **17.04.2002**
(21) Anmeldenummer: 00117656.9
(22) Anmeldetag: 16.08.2000
(51) Int. Cl.: H04N 7/24, G06F 17/30

(54) **Verfahren und Vorrichtung zur Steuerung von Interaktivität von Elementen einer Videosequenz**
Method and apparatus for controlling the interactivity of elements in a video sequence
Méthode et appareil pour contrôler l'activité d'éléments dans une séquence vidéo

(43) Veröffentlichungstag der Anmeldung: 20.03.2002
(73) Patentinhaber: active-film.com AG, 60487 Frankfurt am Main (DE)
(72) Erfinder: Hampl, Tilman, 97297 Waldbüttelbrunn (DE); Piegsda, Winfried, 76344 Eggenstein-Leopoldshafen (DE); Sonntag, Ralph, Dr., 36093 Künzell (DE)
(74) Vertreter: Grünecker, Kinkeldey, Stockmair & Schwanhäusser Anwaltssozietät

(56) Entgegenhaltungen:
- EP-A- 0 982 943
- WO-A-99/09744
- DRUCKER D: "QUICK TIME TURNS 2.0 THINK MULTIMEDIA AND AS LIKELY AS NOT YOU WILL THINK QUICKTIME" CD ROM PROFESSIONAL,XX,XX, Bd. 7, Nr. 4, 1. Juli 1994 (1994-07-01), Seiten 27-30, XP000600301 ISSN: 1049-0833

## Beschreibung

Die Erfindung betrifft ein Verfahren und eine Vorrichtung zur Steuerung von Interaktivität von Elementen einer Videosequenz gemäß dem Oberbegriff des Anspruchs 1.

Durch die Notwendigkeit für einen Anbieter Informationen auf einfache und attraktive Weise einem Kunden bereitzustellen, durch die steigende Verbreitung verschiedenster Wiedergabeplattformen für Videosequenzen und durch den Wunsch des Kunden die Informationen, die er erhält möglichst selbst zu bestimmen, wird Interaktivität in Videosequenzen zu einem wichtigen Mittel, um Informationen verfügbar zu machen.

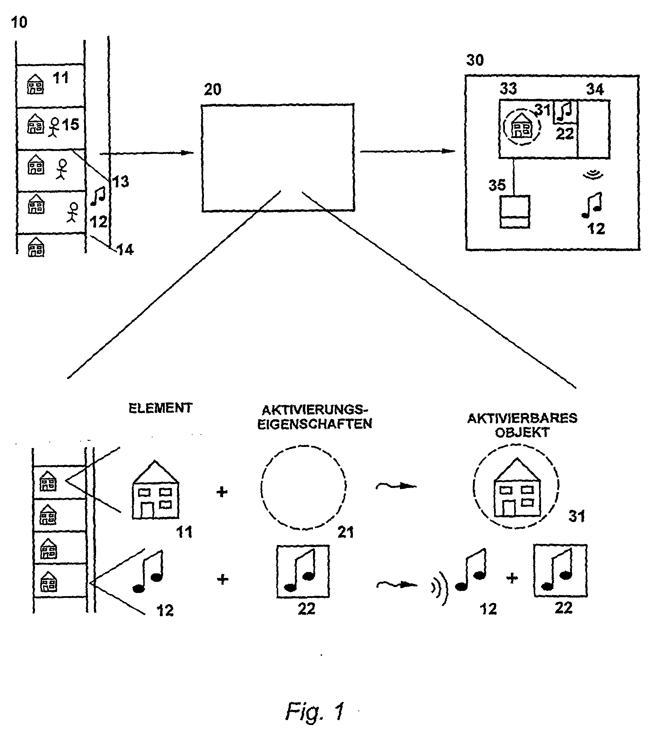

Figur 1 zeigt ein grundlegendes Schema einer Erstellung von Interaktivität für Elemente 11, 12 oder 15 einer Videosequenz 10. Die Videosequenz 10 umfasst, hier beispielhaft gezeigt, eine Bildsequenz 13 und eine Tonspur 14. In einer Einrichtung 20 zur Erstellung der Interaktivität werden für die Elemente 11 und 12 Aktivierungseigenschaften 21 und 22 festgelegt und aktivierbare Objekte 31 und (12+22) erstellt. Die aktivierbaren Objekte 31, (12+22) werden in die Videosequenz 10 eingebunden, um in einer Wiedergabeplattform 30 Interaktivität bereitzustellen. In der Wiedergabeplattform 30 wird die Bildsequenz 13 in einer Bildschirmeinheit 33 mit dem aktivierbaren Objekt 31 und der aktivierbaren Fläche 22 dargestellt, und die Tonspur 14 durch eine Tonwiedergabeeinheit 34 als Tonfolge 12 wiedergegeben. Ein Betrachter (nicht dargestellt) hat durch Aktionen mit einer Zeigereinheit 35 die Möglichkeit, die aktivierbaren Objekte 31 oder (12+22) zu aktivieren. Die Aktivierungseigenschaften 21, 22 können verschiedene Ereignisse für unterschiedliche Aktionen des Betrachters enthalten. Zeigt der Betrachter mittels der Zeigereinheit 35 auf das aktivierbare Objekt 31 kann ein informativer Text zu dem Element 11 angezeigt werden. Drückt der Betrachter beim Zeigen eine Taste auf der Zeigereinheit 35, so kann eine kurze Videosequenz (nicht dargestellt) mit weiteren aktivierbaren Objekten dargestellt werden, nach dessen Ende mit der Videosequenz 10 fortgefahren werden kann.

Wie in Figur 1 dargestellt, können die Elemente der Videosequenz 10 visuell (Haus 11) oder auditiv (Tonfolge 12), aber auch inhaltsbezogen (beispielsweise: Freude oder Freundschaft) sein.

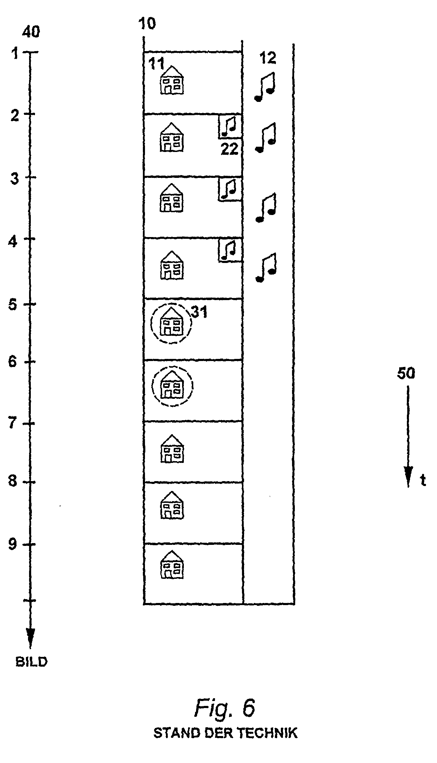

In Figur 6 ist eine Videosequenz 10 dargestellt, die gemäß dem Stand der Technik, ohne eine Aktion eines Betrachters (nicht dargestellt) wiedergegeben wird. Die Achse der Bildnummerierung 40 und die Zeitachse 50 zeigen den Ablauf der Videosequenz 10 an. Das Element 11 wird in den Bildem 5 und 6 aktivierbar durch das aktivierbare Objekt 31. Das Element 12 ist über die aktivierbare Fläche 22 aktivierbar in den Bildern 2 bis 4.

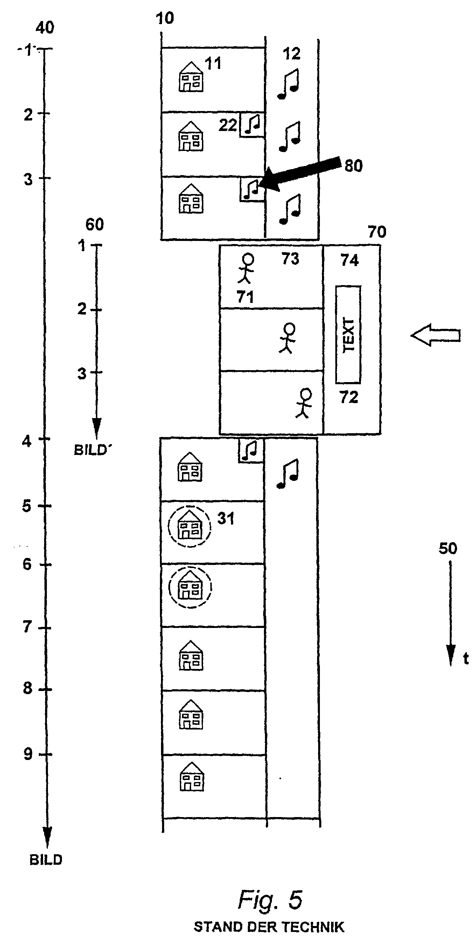

In Figur 5 ist eine Videosequenz 10 dargestellt, die gemäß dem Stand der Technik wiedergegeben wird, wobei eine Aktion 80 eines Betrachters (nicht dargestellt) betreffend eine aktivierbare Fläche 22 durch Einfügen einer Videosequenz 70 beantwortet wird. Die Achsen der Bildnummerierung 40 und 60, sowie die Zeitachse 50 zeigen den Ablauf der Videosequenzen 10 und 70 an. Das Element 11 wird in den Bildern 5 und 6 aktivierbar durch das aktivierbare Objekt 31. Das Element 12 ist über die aktivierbare Fläche 22 aktivierbar und wird in Bild 3 aktiviert. Die Videosequenz 70 umfassend eine Bildsequenz 73 und eine Tonspur 74 wird mit ihren Elementen 71 und 72 dargestellt. Danach wird mit der Wiedergabe der Videosequenz 10 fortgefahren.

Interaktivität in Videosequenzen ist mit verschiedenen Problemen behaftet. Beispielsweise kann ein Betrachter länger brauchen als ein durchschnittlicher Betrachter, um visuelle aktivierbare Objekte zu identifizieren und zu aktivieren, und dagegen auditive Elemente schneller erkennen als üblich. Bei einer herkömmlichen Videosequenz mit aktivierbaren Objekten wird dieser Betrachter von den aktivierbaren Objekten auditive häufig, visuelle manchmal und bewegte visuelle Objekte selten aktivieren.

Weiterhin wird der Betrachter, entgegen seinen Interessen, mit immer den gleichen breit gestreuten Informationsangeboten in Form von aktivierbaren Objekten überhäuft und muss das Informationsangebot erst entsprechend seiner Interessen durchsuchen.

WO-A-99/09744 beschreibt ein System zur Ergänzung individueller Fernsehinhalte durch zusätzlich visualisierte Informationen. Ein Betrachter der Fernsehinhalte kann über ein ihm dargestelltes Menü eine Auswahl dieser Zusatzinformationen treffen. Ein Auswahlvorgang des Betrachters in dem Menü wird in einem Server, der die Zusatzinformation für den Betrachter bereit stellt, protokolliert. In dem Menü passt der Server die Auswahl der dem Betrachter angebotenen Zusatzinformationen an die bisher erfolgten Auswahlvorgänge des Betrachters an.

EP-A2-0 982 943 beschreibt ein System, in dem einem Empfänger zusätzlich zu einem Fernsehsignal über das Internet eine personalisierte Auswahl von Internet-Adressen übertragen wird. Die Personalisierung der Auswahl an Internet-Adressen erfolgt abhängig von Verhalten, Profil oder Standort des Empfängers.

Es ist die Aufgabe der vorliegenden Erfindung, Interaktivität in personalisierten Videosequenzen so zur Verfügung zu stellen, dass eine verbesserte Verwendbarkeit erreicht wird.

Diese Aufgabe wird erfindungsgemäß durch ein Verfahren nach Patentanspruch 1 gelöst. Die abhängigen Ansprüche beschreiben bevorzugte Ausführungsformen der Erfindung.

Bei einer zusätzlichen Verfahrensausgestaltung wird die protokollierte Aktion verwendet, um Aktivierbarkeit aktivierbarer Objekte in Videosequenzen zu steuern, die nach der protokollierten Wiedergabe erfolgen. Für eine wiederholte Wiedergabe einer Videosequenz, in der während der ersten Wiedergabe keine Aktionen des Betrachters protokolliert wurden, kann der Aktivierbarkeitszeitraum beispielsweise ausgedehnt werden, um dem Betrachter bessere Möglichkeiten zur Aktivierung zu bieten.

Gemäß einer bevorzugten Ausgestaltung des Verfahrens wird die Aktion eines Betrachters bei dem Betrachter oder bezogen auf den Betrachter bei einem Anbieter der Videosequenz gespeichert, wodurch lokal ohne großen Aufwand die Auswertung der protokollierten Aktion und die Steuerung der Aktivierbarkeit erfolgen kann, oder der Anbieter eine neue Videosequenz für den Betrachter seinen bisherigen Aktionen anpassen kann.

Besonders zweckmäßig ist es, die Aktion bei einer Wiedergabeplattform, bezogen auf eine Betrachtergruppe, oder bei dem Anbieter der Videosequenz, bezogen auf die Wiedergabeplattform oder die eine Betrachtergruppe zu speichern, wenn eine Wiedergabeplattform von mehr als einem Betrachter verwendet wird. Die Wiedergabeplattform kann typischerweise von einer Betrachtergruppe mit besonderen Interessen verwendet werden, die dann gezielt berücksichtigt werden können.

Gemäß einer bevorzugten Ausgestaltung des Verfahrens wird eine Aktivierungseigenschaft der aktivierbaren Objekte in den Videosequenzen abhängig von der Betrachteraktion gesteuert, wodurch beispielsweise die Größe, Position oder Farbe eines Repräsentanten des aktivierbaren Elements verändert werden kann, um das aktivierbare Objekt an die Aktion des Betrachters anzupassen.

Gemäß einer weiteren bevorzugten Ausgestaltung des Verfahrens erfolgt die Umsetzung der beschriebenen Verfahren durch Ausnutzen der in einer Software QuickTime vorhandenen Programmiermöglichkeiten. Es muss kein zusätzliches Softwareprodukt beim Betrachter eingesetzt werden, um die Protokollierung oder die Steuerung der Aktivierbarkeit zu erreichen.

Bei einer bevorzugten Verfahrensausgestaltung wird zur Realisierung eines der beschriebenen Verfahren eine rechnergesteuerte Vorrichtung verwendet, wodurch kurze Bearbeitungszeiten und eine optimierte Ausgestaltung des Verfahrens ermöglicht werden.

Gemäß einer weiteren bevorzugten Ausgestaltung enthält ein Speichermedium ein Computerprogramm oder eine Befehlssequenz, die eines der beschriebenen Verfahren realisieren. Durch diese Ausgestaltung wird ein einmal implementiertes Verfahren mehrfach verwendbar und transportabel.

Die angefügten Zeichnungen zeigen:
- Figur 1: ein grundlegendes Schema für die Erstellung von Interaktivität von Elementen einer Videosequenz,
- Figur 2: eine Darstellung eines erfindungsgemäßen Ablaufs einer Videosequenz mit aktivierbaren Objekten unter dem Einfluss einer Betrachteraktion,
- Figur 3: eine Darstellung der erfindungsgemäßen Abhängigkeit der Aktivierbarkeit von Element 12 von Betrachteraktionen in drei Fällen,
- Figur 4: eine Darstellung der erfindungsgemäßen Abhängigkeit der Aktivierbarkeit von Element 11 von Betrachteraktionen in drei Fällen,
- Figur 5: eine Darstellung des Ablaufs einer Videosequenz mit einer Betrachteraktion gemäß dem Stand der Technik,
- Figur 6: eine Darstellung des Ablaufs einer Videosequenz ohne Betrachteraktion gemäß dem Stand der Technik,
- Figur 7: eine Darstellung der Aktivierbarkeit eines Elements gemäß dem Stand der Technik in drei Fällen.

Die Erfindung wird im folgenden unter Bezug auf die angefügten Zeichnungen anhand bevorzugter Ausführungsformen beschrieben.

Die Videosequenz 10 aus Figur 1 kann insbesondere durch Digitalisieren einer Bildund Tonsequenz und einer darauf folgenden Komprimierung entstehen. Der Ablauf der Videosequenz ist von einem Betrachter insbesondere steuerbar durch:
- anhalten, zoomen, vor- oder zurückspulen mit und ohne Wiedergabe und
- die Aktivierung von aktivierbaren Objekten in der Videosequenz.

Die Wiedergabeplattform 30 aus Figur 1 kann beispielsweise ein Computer, ein Mobiltelefon, ein Femseher mit entsprechenden Eigenschaften oder ein Femseher im Zusammenhang mit einem Videorecorder sein. Ein Computer kann insbesondere folgendes umfassen: eine Anzeigeeinheit, eine Tastatur, eine Maus als Zeigereinheit, eine Steuereinheit, eine Festplatte und ein Laufwerk für optische oder magnetische Speichermedien. Ferner kann der Computer sinnvoller insbesondere durch folgende Einrichtungen ergänzt sein: ein Modem, ein Mikrofon, Lautsprecher und eine digitale Kamera. Mittel zur Bereitstellung oder Verwaltung von Interaktivität für die Videosequenz 10 können mit der Videosequenz 10 zur Wiedergabeplattform 30 gelangen oder in der Wiedergabeplattform 30 enthalten sein, beispielsweise in einer Software zur Wiedergabe der Videosequenz 10 oder aufgeteilt in eine Software zur Bereitstellung und eine zur Verwaltung von Interaktivität.

Die Wiedergabeplattform 30 kann unterschiedliche Hard- oder Softwarekomponenten enthalten, kann sich aber auch bei identischen Komponenten durch altersbedingte Abnutzung oder Fehlfunktionen, oder parallele zusätzliche Verwendung in ihrem Verhalten unterscheiden. Die Aktivierung der aktivierbaren Objekte wird auch dadurch unterschiedlich schnell ablaufen können. Ist beispielsweise eine bestimmte Taste auf der Tastatur des Betrachters defekt und reagiert nur noch auf jeden zweiten oder dritten Tastendruck, so verzögert sich die Aktivierung eines zugeordneten aktivierbaren Objekts.

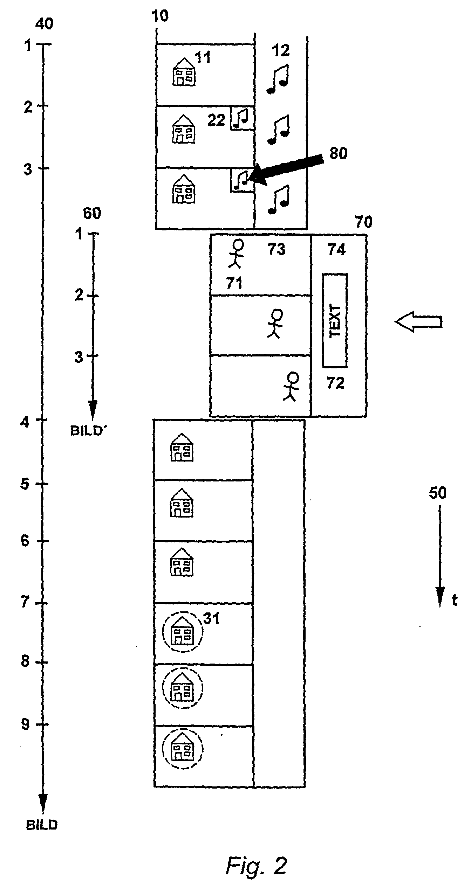

In Figur 2 ist eine in einer Wiedergabeplattform wiedergegebene Videosequenz 10 mit den Elementen 11, 12 in seinem zeitlichen Ablauf beispielsweise bei Vorliegen einer Betrachteraktion 80 in Bildnummer 3 der Videosequenz 10 dargestellt. Die Achsen der Bildnummerierung 40 und 60 sowie die Zeitachse 50 zeigen den Ablauf der Videosequenzen 10 und 70 an. Das Element 12 wird in den Bildern 2 und 3 aktivierbar durch die aktivierbare Fläche 22. Ein Betrachter (nicht dargestellt) aktiviert die aktivierbare Fläche 22 in Bild 3. Die Aktion 80 des Betrachters wird beantwortet durch Einfügen der Videosequenz 70 umfassend seine Bildsequenz 73 und Tonspur 74 sowie Elemente 71 und 72. Nach dem letzten Bild der Videosequenz 70 wird mit Bild 4 der Videosequenz 10 fortgefahren. Weil die aktivierbare Fläche 22 bereits in Bild 3 aktiviert wurde, wird sie beispielsweise in Bild 4 nicht mehr dargestellt. Weiterhin wird das Element 11 beispielsweise erst in Bild 7 durch sein aktivierbares Element 31 aktivierbar. Dem Betrachter wird dadurch nach Ende der Videosequenz 70 Zeit gegeben, sich wieder auf die Videosequenz 10 zu konzentrieren, bevor ihm neue aktivierbare Objekte angeboten werden. Die Chancen für eine Aktivierung des aktivierbaren Objekt 31 können also erhöht werden.

Zur Veranschaulichung des erfindungsgemäßen Verfahrens wird im folgenden die Videosequenz 10 ein Werbevideo für ein Musikgeschäft 11 sein, das eine Vielzahl von Musiktiteln verkaufen möchte. Die aktivierbare Fläche 22 des Musiktiteis 12 wird durch die Aktion 80 eines Betrachters aktiviert, um in der Videosequenz 70 den Interpreten 71 und seine Karriere 72 darzustellen. Sollte der Betrachter die gleiche Videosequenz ein zweites Mal wiedergeben, so werden ihm, durch Auswertung der protokollierten Aktion 80 und entsprechende Steuerung der Aktivierbarkeit aktivierbarer Objekte, beispielsweise in der Videosequenz 10 bevorzugt Musiktitel einer ähnlichen Musikrichtung wie der Musiktitel 12 als aktivierbare Objekte angeboten. Lässt der Betrachter einen Teil einer Videosequenz 10 mit erhöhter Geschwindigkeit wiedergeben oder überspringt ihn sogar, so kann beispielsweise die Aktivierbarkeit von folgenden wichtigen Elemente verlängert werden, gleichzeitig der Repräsentant dieser Elemente vergrößert oder hervorgehoben werden und die unwichtigen Elemente nicht aktivierbar gemacht werden.

Mögliche Aktivierungseigenschaften eines aktivierbaren Elements sind beispielsweise:
- die durch verschiedene Betrachteraktionen auslösbaren Ereignisse (beispielsweise neue Videosequenz, Textanzeige oder eine Verbindung im Internet aufbauen),
- die verschiedenen Betrachteraktionen, die zur Aktivierung eines Elements führen,
- der Repräsentant 21, 22 für das aktivierbare Element 11, 12 in Gestalt, räumlicher Anordnung, Farbe, Größe.

In einer bevorzugten Ausführungsform wird die Aktion 80 des Betrachters zur Protokollierung beispielsweise lokal und temporär auf der Wiedergabeplattform des Betrachters gespeichert. Beispielsweise kann in der Wiedergabeplattform in einem temporären Speicherbereich eine Statistik mit folgenden Daten geführt werden:
- Kategoriezähler von Betrachteraktionen für aktivierbare Objekte aus verschiedenen Kategorien,
- ein Zeitzähler für die Gesamtdauer der wiedergegebenen Videosequenzen,
- ein Zeitstempel der letzten Betrachteraktion.

In diesem Beispiel ist jedes aktivierbare Objekt in eine der Kategorien (beispielsweise Jazz, Soul, Pop, Klassik oder Rock) eingeteilt, und ein von einer Betrachteraktion ausgelöstes Ereignis des aktivierbaren Objekts erhöht den entsprechenden Kategoriezähler, den Zeitzähler entsprechend der Differenz zum letzten Zeitstempel und setzt den Zeitstempel neu, entsprechend der in der Videosequenz abgelaufenen Zeit. Am Ende der Videosequenz erhöht ein automatisch ausgelöstes Ereignis den Zeitzähler und setzt den Zeitstempel auf Null zurück. Die folgenden Daten können in einer Ausgestaltung des Verfahrens beispielsweise bei Bedarf bestimmt, oder ebenfalls abgespeichert werden und mit jedem Ereignis neu berechnet werden:
- ein Aktivitätskoeffizient, gebildet aus der Summe der Kategoriezähler geteilt durch den Zeitzähler,
- eine Zielkategorie, ausgewertet als Maximum der Kategoriezähler.

Aus Zielkategorie und Aktivitätskoeffizient lassen sich beispielsweise Startwerte für eine wiederzugebende Videosequenz bestimmen. Der Startwert entscheidet über eine kategorieabhängige Aktivierbarkeit der aktivierbaren Objekte in der Videosequenz, dabei wird zunächst eine gleichverteilte Aktivierbarkeit und bei vorhandener Zielkategorie eine gewichtete Aktivierbarkeit der aktivierbaren Objekte der Kategorie in der Videosequenz eingestellt. Bedingungen wie ein Schwellwert für eine minimalen Aktivitätskoeffizienten, ein Minimum für den Anteil des Zielkategoriezählers an dem Gesamtkategoriezähler können an die Existenz einer Zielkategorie geknüpft werden. Dieses Ausführungsbeispiel ist leicht erweiterbar durch Verwendung von mehr als einer Zielkategorie, komplexeren Bedingungen und insbesondere durch Aufteilung der Videosequenz in Abschnitte an dessen Ende eine Auswertung der Zähler erfolgt, um den Startwert für den nächsten Abschnitt zu bestimmen.

In einem Computer als Wiedergabeplattform kann beispielsweise die Software QuickTime zur Darstellung der Videosequenz verwendet werden. Sie bietet umfangreiche Programmiermöglichkeiten an, mit denen es beispielsweise möglich ist eine Aktion eines Betrachters zu protokollieren und in einer Datenbank zu speichern. Weiterhin können beispielsweise Aktivierungseigenschaften oder zeitliche Aktivierbarkeiten von Elementen einer Videosequenz mit Hilfe der Programmiermöglichkeiten verwaltet werden, wodurch auch das Steuern der Aktivierbarkeit der aktivierbaren Elemente ermöglicht wird.

Insbesondere kann in einer Datenbank, folgendes abgelegt werden:
- ein Identifikationsmerkmal für die Videosequenz 10,
- Gesamtdauer der Videosequenz 10,
- ein Identifikationsmerkmal für das aktivierte Objekt 31,
- relativer Zeitpunkt der Aktivierung in der Videosequenz 10 und
- Art der Aktivierung.

Die Datenbank bietet die Grundlage zur Verwaltung größerer und komplexerer Datenmengen, die beispielsweise parallel zu einer oben beschriebenen temporären Auswertung oder intern getrennt in Kurzzeit- und Langzeitdaten ausgewertet werden kann. Durch das Speichem und Auswerten der Aktivierungsart kann beispielsweise die oben beschriebene defekte Taste der Wiedergabeplattform 30 als potentieller Problemfall identifiziert und mittels Steuerung von Aktivierungseigenschaften in Videosequenzen umgangen werden.

Der Betrachter kann beispielsweise ein Konsument der Videosequenz 10 oder eine Konsumentengruppe der Videosequenz 10 sein. Eine Wiedergabeplattform 30 kann von unterschiedlichen Betrachtem, beispielsweise einer Betrachtergruppe, verwendet werden, wobei eine Unterscheidung der Betrachter nicht notwendig, aber beispielsweise durch eine Authentisierung denkbar ist. Die Betrachtergruppe kann, beispielsweise durch die räumliche Lage der Wiedergabeplattform in einem Fachgeschäft, bevorzugt gleiche Interessen haben. Für die Wiedergabeplattform 30 wird beispielsweise lokal bei der Wiedergabeplattform die Betrachteraktion 80 protokolliert, um für die Betrachtergruppe die Aktivierbarkeit der aktivierbaren Objekte zu steuem. Andererseits kann ein Anbieter auch die Aktionen einer Betrachtergruppe, unabhängig von der gemeinsamen Nutzung einer Wiedergabeplattform 30, intern verwalten, wenn er geeignete Kriterien für Betrachtergruppen definiert.

Der Anbieter kann die protokollierten Daten der Wiedergabeplattform aus dem Fachgeschäft beispielsweise monatlich vor Ort auslesen und zentral auswerten.
Wird die protokollierte Aktion 80 bei einem Anbieter der Videosequenz 10 bezogen auf einen Betrachter, eine Wiedergabeplattform oder eine Betrachtergruppe vorzugsweise in einer Datenbank gespeichert, so kann der Anbieter bei einer folgenden Anforderung einer Videosequenz durch den Betrachter, die Wiedergabeplattform oder die Betrachtergruppe beispielsweise eine Videosequenz individuell erstellen, oder aber die Aktivierbarkeit der aktivierbaren Objekte in der Videosequenz den protokollierten Aktionen anpassen. Die protokollierten Aktion 80 kann dem Anbieter beispielsweise mit der Anforderung einer nächsten Videosequenz über das Internet zu kommen, über welches auch die Videosequenz dem Betrachter zur Verfügung gestellt werden kann.

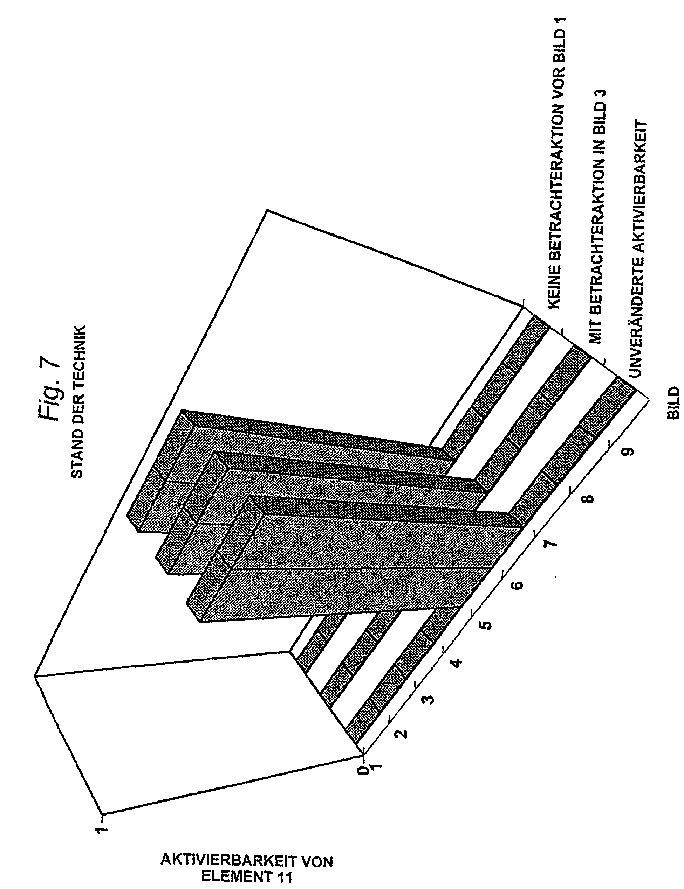

Wie in Figur 7 zu erkennen, ist die Aktivierbarkeit von Element 11 aus den Figuren 5 und 6 gemäß dem Stand der Technik unabhängig von Aktionen des Betrachters.

Dargestellt ist in Figur 7 die Aktivierbarkeit des Elements 11 aufgetragen gegen die Bildnummer der Videosequenz 10 für drei Fälle:
- unveränderte Aktivierbarkeit; ohne Betrachteraktion, wie in Figur 6 dargestellt,
- mit der Betrachteraktion 80 in Bild 3 der Videosequenz 10, wie in Figur 5 dargestellt und
- ohne Betrachteraktion vor Bild 1 der Videosequenz 10.

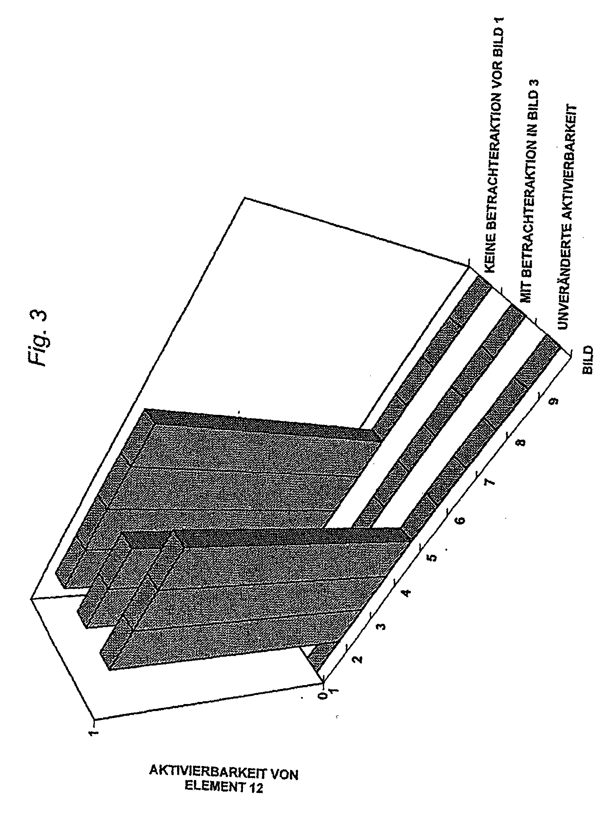

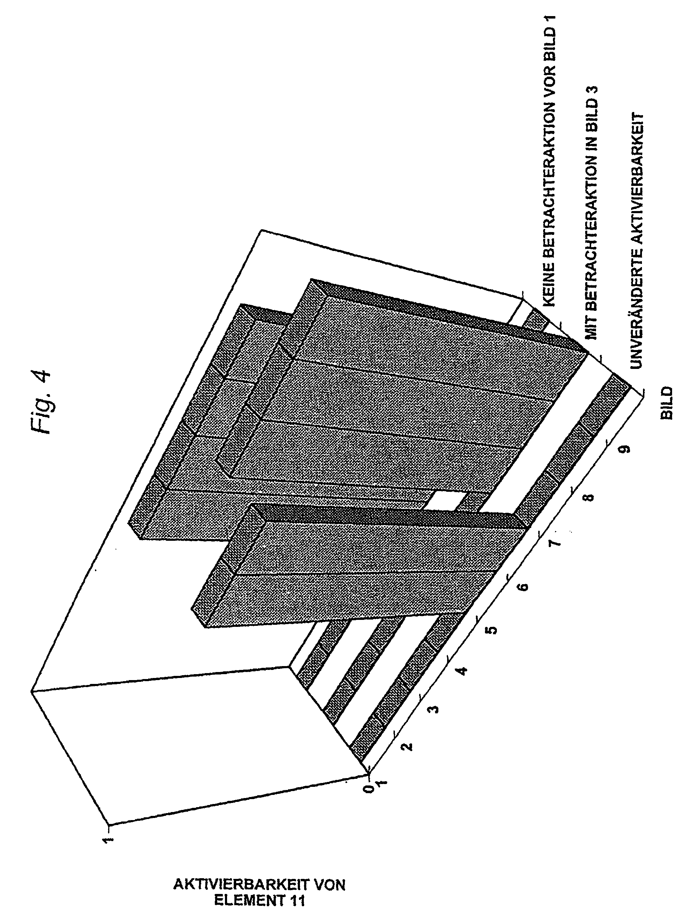

Die Aktivierbarkeit eines aktivierbaren Objekts wird, wie beispielhaft in Figur 3 und Figur 4 dargestellt, erfindungsgemäß abhängig von Betrachteraktionen gesteuert. In Figur 3 ist die Aktivierbarkeit von Element 12 aufgetragen gegen die Bildnummer für die drei Fälle aus Figur 7 dargestellt. Die unveränderte Aktivierbarkeit von Element 12 zeigt, dass, die aktivierbare Fläche 22 in den Bildern 2, 3 und 4 dargestellt wird (Figur 6). Findet in Bild 3 der Videosequenz 10 die Betrachteraktion 80 statt (Figur 2), so ist wie in Figur 3 zu sehen, die Aktivierbarkeit von Element 12 nur in den Bildern 2 und 3 gegeben. Findet dagegen weder in Bild 3 noch vor Bild 1 der Videosequenz 10 eine Betrachteraktion statt, dann wird beispielsweise die Aktivierbarkeit der aktivierbaren Fläche 22 um ein Bild verlängert, um dem Betrachter eine längere Reaktionszeit einzugestehen.

Analog zur Figur 3 zeigt Figur 4 die Aktivierbarkeit von Element 11 aufgetragen gegen die Bildnummer für die bekannten drei Fälle. Der Fall unveränderter Aktivierbarkeit zeigt für die Bilder 5 und 6 eine Aktivierbarkeit des Elements 11, die bei einer Betrachteraktion 80 In Bild 3 entsprechend Figur 2 auf die Bilder 7, 8 und 9 verschoben und gleichzeitig verlängert wird. Der dritte Fall zeigt wiederum die gesteuerte Aktivierbarkeit von Element 11, falls weder vor Bild 1 noch in Bild 3 eine Benutzeraktion erfolgt ist. Der Aktivierbarkeitszeitraum für Element 11 wird beispielsweise verlängert, um eine langsamere Reaktion des Betrachters oder Bedienungsprobleme des Betrachters bei der Verwendung der Wiedergabeplattform zu berücksichtigen.

Eine rechnergesteuerte Vorrichtung, die Mittel enthält, die beschriebenen Verfahren zu realisieren, kann beispielsweise ein Computer, ein Mobiltelefon, ein Femseher mit entsprechenden Eigenschaften oder ein Femseher im Zusammenhang mit einem Videorecorder sein.

Ein Computerprogramm welches das beschriebene Verfahren implementiert, kann auf einer Festplatte eines Computer- oder einem anderen magnetischen oder optischen Datenträger abgelegt sein.

## Patentansprüche

1. Verfahren zur rechnergestützten Steuerung aktivierbarer Objekte in Videosequenzen, umfassend die Schritte:
Wiedergeben einer Videosequenz (10) mit aktivierbaren Objekten;
Verarbeiten einer Aktion (80) eines Betrachters, die Ablauf oder Darstellung der Videosequenz (10) beeinflusst;
Speichern der Aktion (80) des Betrachters zur Protokollierung;
Steuern der aktivierbaren Objekte (31(12+22)) in den Videosequenzen abhängig von für den Betrachter protokollierten Aktionen;
**dadurch gekennzeichnet, dass**
Aktivierbarkeitszeiträume für darzustellende aktivierbare Objekte (31, (12+22)) abhängig von den für den Betrachter protokollierten Aktionen gesteuert werden.

2. Verfahren nach Anspruch 1 **dadurch gekennzeichnet, dass**
Repräsentanten der darzustellenden aktivierbaren Objekte (31, (12+22)) in Ihrer Darstellung abhängig von den für den Betrachter protokollierten Aktionen gesteuert werden.

3. Verfahren nach Anspruch 1 oder 2 **dadurch gekennzeichnet, dass**
Betrachteraktionen, die zur Aktivierung eines Elements führen, abhängig von den für den Betrachter protokollierten Aktionen gesteuert werden.

4. Verfahren nach einem der Ansprüche 1 bis 3 **dadurch gekennzeichnet, dass** anhand der protokollierten Aktionen ein Aktivitätskoeffizient ermittelt wird, um die Darstellung der aktivierbaren Objekte (31, (12+22)) an eine Aktivität des Betrachters anzupassen.

5. Verfahren nach einem der Ansprüche 1 bis 4 **dadurch gekennzeichnet, dass** ein relativer Zeitpunkt der Aktion (80) in der Videosequenz (10) protokolliert wird, um die Darstellung der aktivierbaren Objekte (31, (12+22)) an die Aktionen des Betrachters anzupassen.

6. Verfahren nach einem der Ansprüche 1 bis 5 **dadurch gekennzeichnet, dass** eine Aktivierungsart der Aktion (80) protokolliert wird, um die Darstellung der aktivierbaren Objekte (31, (12+22)) an die Aktionen des Betrachters anzupassen.

7. Verfahren nach einem der Ansprüche 1 bis 6 **dadurch gekennzeichnet, dass**
die Aktion (80) bei dem Betrachter oder bezogen auf den einen Betrachter bei einem Anbieter der Videosequenz (10) gespeichert wird.

8. Verfahren nach Anspruch 7 **dadurch gekennzeichnet, dass**
die Aktion (80) bei einer Wiedergabeplattform (30), bezogen auf eine Betrachtergruppe, oder bei dem Anbieter der Videosequenz (10), bezogen auf die Wiedergabeplattform (30) oder die eine Betrachtergruppe gespeichert wird.

9. Rechnergesteuerte Vorrichtung enthaltend Mittel, die die Schritte des Verfahrens nach einem der Ansprüche 1 bis 8 realisieren.

10. Speichermedium enthaltend ein Computerprogramm oder eine Befehlssequenz, die die Schritte des Verfahrens nach einem der Ansprüche 1 bis 8 realisieren.

## Claims

1. A method for computer based controlling of activatable objects in video sequences, comprising the steps:
reproducing a video sequence (10) having activatable objects;
processing an action (80) of a viewing person, which affects progress or display of the video sequence (10);
storing the action (80) of the viewing person for protocolling it;
controlling the activatable object (31,(12 + 22)) in the video sequences depending on actions protocolled for the viewing person;
**characterised in that**
depending on the actions protocolled for the viewer activatability time periods are controlled for activatable objects (31,(12 + 22)) to be displayed.

2. The method according to claim 1 **characterised in that** representatives of the activatable objects (31,(12 + 22)) to be displayed are controlled in their representation depending on the actions protocolled for the viewing person.

3. The method according to one of claims 1 or 2 **characterised in that** the viewing persons actions leading to an activation of an element are controlled depending on the actions protocolled for the viewing person.

4. The method according to one of claims 1 to 3 **characterised in that** an activity coefficient is determined based on the protocolled actions for adapting the representation of the activatable objects (31,(12 + 22)) to an activity of the viewing person.

5. The method according to one of claims 1 to 4 **characterised in that** a relative moment in time of the action (80) in the video sequence (10) is protocolled for adapting the representation of the activatable objects (31,(12 + 22)) to the actions of the viewing person.

6. The method according to one of claims 1 to 5 **characterised in that** the type of activation of the action (80) is protocolled for adapting the representation of the activatable objects (31, (12 + 22)) to the action of the viewing person.

7. The method according to one of claims 1 to 6 **characterised in that** the action (80) is stored at the viewing person or associated to said viewing person at a provider of the video sequence (10).

8. The method according to claim 7 **characterised in that** the action (80) is stored at a reproduction platform, associated to a group of viewing persons or at the provider of said video sequence, associated to the reproduction platform or the group of viewing persons.

9. A computer controlled apparatus comprising means realising the steps of the method according to one of claims 1 to 8.

10. A storage medium comprising a computer program or an instruction sequence realising the steps of a method according to one of claims 1 to 8.

## Revendications

1. Procédé pour le contrôle assisté par ordinateur des objets pouvant être activés dans des séquences vidéo, comprenant les étapes consistant à :
reproduire une séquence vidéo (10) comportant des objets pouvant être activés ;
traiter une action (80) d'un spectateur qui affecte le déroulement ou la présentation de la séquence vidéo (10) ;
mémoriser l'action (80) du spectateur pour la consignation ;
contrôler les objets pouvant être activés (31,(12+22)) dans les séquences vidéo en fonction des actions consignées pour le spectateur ;
**caractérisé en ce que** les intervalles de possibilité d'activation sont contrôlés pour des objets à présenter pouvant être activés (31,(12+22)), en fonction des actions consignées pour le spectateur.

2. Procédé selon la revendication 1, **caractérisé en ce que** des représentants des objets à présenter pouvant être activés (31,(12+22)), sont contrôlés au niveau de leur présentation en fonction des actions consignées pour le spectateur.

3. Procédé selon la revendication 1 ou 2, **caractérisé en ce que** les actions du spectateur qui entraînent l'activation d'un élément sont contrôlées en fonction des actions consignées pour le spectateur.

4. Procédé selon l'une quelconque des revendications 1 à 3, **caractérisé en ce qu'**à l'aide des actions consignées, un coefficient d'activité est déterminé pour adapter la présentation des objets pouvant être activés (31,(12+22)) à une activité du spectateur.

5. Procédé selon l'une quelconque des revendications 1 à 4, **caractérisé en ce qu'**un moment relatif de l'action (80) dans la séquence vidéo (10) est consigné pour adapter la présentation des objets pouvant être activés (31,(12+22)) aux actions du spectateur.

6. Procédé selon l'une quelconque des revendications 1 à 5, **caractérisé en ce qu'**un type d'activation de l'action (80) est consigné pour adapter la présentation des objets pouvant être activés (31,(12+22)) aux actions de l'observateur.

7. Procédé selon l'une quelconque des revendications 1 à 6, **caractérisé en ce que** l'action (80) est mémorisée chez le spectateur ou pour ledit spectateur chez un fournisseur de la séquence vidéo (10).

8. Procédé selon la revendication 7, **caractérisé en ce que** l'action (80) est mémorisée sur une plate-forme de reproduction (30), pour un groupe de spectateurs, ou chez le fournisseur de la séquence vidéo (10), pour la plate-forme de reproduction (30) ou ledit groupe de spectateurs.

9. Dispositif piloté par ordinateur, comprenant des moyens qui réalisent les étapes du procédé selon l'une quelconque des revendications 1 à 8.

10. Support de mémoire, contenant un programme informatique ou une séquence de commandes qui réalisent les étapes du procédé selon l'une quelconque des revendications 1 à 8.
